# EUROPEAN PATENT APPLICATION

(11) **EP 4 656 493 A1**
(43) Date of publication of application: **03.12.2025**
(21) Application number: 25173113.9
(22) Date of filing: 29.04.2025
(51) Int. Cl.: B61L 25/08, B61L 27/30, B61L 27/60, G06Q 10/06, G06Q 50/40, G06F 21/60

(54) **INFORMATION PROCESSING APPARATUS AND METHOD**

(30) Priority: 31.05.2024 JP 2024089220
(71) Applicant: Hitachi, Ltd., Tokyo 100-8280 (JP)
(72) Inventor: EBATA, Tomoichi, Tokyo, 100-8280 (JP); KINOSHITA, Yukiko, Tokyo, 100-8280 (JP); TESHIMA, Hisanori, Tokyo, 100-8280 (JP); IMAMURA, Masashi, Tokyo, 100-8280 (JP)
(74) Representative: Mewburn Ellis LLP

(57) **Abstract**

An information processing apparatus (1) for integrating controlling operations with use of a metaverse environment. The apparatus includes a processor (10), a memory (11) used by the processor (10), and a communication interface (12) used by the processor (10). Controlling devices for controlling running of moving bodies belonging to a plurality of organizations are metaverse controlling devices (2A, 2B) provided in the metaverse environment. The processor (10), by executing a predetermined computer program stored in the memory (11), acquires design information associated with the metaverse controlling devices (2A, 2B) via the communication interface (12), stores the acquired design information in the memory (11), constitutes an integrated metaverse by connecting the metaverse controlling devices (2A, 2B) in a predetermined level on the basis of the acquired design information associated with the respective metaverse controlling devices (2A, 2B), and arranges objects used by the metaverse controlling devices (2A, 2B) in the integrated metaverse.

## Description

### BACKGROUND OF THE INVENTION

### 1. Field of the Invention

The present invention relates to an information processing apparatus and an information processing method.

### 2. Description of the Prior Art

Railway companies share lines with different railway companies in some cases. For smoothly achieving this line interoperation, information sharing is required between respective railway companies.

A technology for linking different information processing systems is known, even though not developed as a technology for integrating metaverse controlling devices constructed under a metaverse environment, (Japanese Patent Nos. 7414690 and 6674887). Moreover, a technology for sharing information with third parties by using a virtual reality technology is also known, even though not developed as a technology for integrating metaverse controlling devices (Japanese Patent No. 7391317).

For achieving interoperation of moving bodies (trains, etc.) operated by organizations to share travelling routes with other organizations, real-time information sharing is required between controlling devices for controlling running of the moving bodies. It is difficult, however, to completely realize physical integration of respective controlling devices of organizations (railway companies, etc.) having different operation formations or the like of moving bodies. In this situation, information sharing between the respective controlling devices is difficult to achieve.

### SUMMARY OF THE INVENTION

The present invention has been developed to solve the aforementioned problems. An object of the present invention is to provide an information processing apparatus and an information processing method of achieving information sharing between controlling devices for controlling running of moving bodies belonging to respective organizations under a metaverse environment.

An information processing apparatus according to one aspect of the present invention is directed to an information processing apparatus for integrating controlling operations with use of a metaverse environment, the apparatus including: a processor; a memory used by the processor; and a communication interface used by the processor. Controlling devices for controlling running of moving bodies belonging to a plurality of organizations are metaverse controlling devices provided in the metaverse environment. The processor, by executing a predetermined computer program stored in the memory, acquires design information associated with the metaverse controlling devices via the communication interface, stores the acquired design information in the memory, constitutes an integrated metaverse by connecting the metaverse controlling devices in a predetermined level on the basis of the acquired design information associated with the respective metaverse controlling devices, and arranges objects used by the metaverse controlling devices in the integrated metaverse.

The present invention achieves integration of a plurality of metaverse controlling devices.

### BRIEF DESCRIPTION OF THE DRAWINGS

FIG. 1 is a general diagram of an information processing system including an integrated metaverse controlling device corresponding to an "information processing apparatus";
FIG. 2 is a configuration diagram of a virtual reality (VR) device;
FIG. 3 is an explanatory diagram illustrating an example of a relation between metaverse controlling devices of respective companies and the integrated metaverse controlling device;
FIG. 4 is a functional configuration diagram of the metaverse controlling device;
FIG. 5 is an explanatory diagram of design information associated with the metaverse controlling device;
FIG. 6 illustrates an example of a control metaverse object management function which manages objects used by the metaverse controlling device;
FIG. 7 is a functional configuration diagram of the integrated metaverse controlling device;
FIG. 8 is a diagram illustrating details of a part of functions in FIG. 7;
FIG. 9 is a sequence diagram illustrating a process for integrating a plurality of the metaverse controlling devices;
FIG. 10 is a sequence diagram illustrating an access control process;
FIG. 11 is an explanatory diagram illustrating an example of a user authentication and access control function;
FIG. 12 is a schematic diagram illustrating a state of the integrated metaverse controlling device;
FIG. 13 is a schematic diagram illustrating a configuration change of the integrated metaverse controlling device depending on an access permission difference between users;
FIG. 14 is a schematic diagram illustrating a state of collection and integration of only specific systems in a plurality of systems included in the metaverse controlling device;
FIG. 15 is an explanatory diagram illustrating a state of successive connection of a plurality of the metaverse controlling devices to produce the integrated metaverse controlling device;
FIG. 16 is an explanatory diagram illustrating a state of integration for each of a plurality of systems (functions) included in each of the plurality of metaverse controlling devices to produce the integrated metaverse controlling device;
FIG. 17 is a sequence diagram illustrating a process for enabling only a user permitted by a group owner to browse the integrated metaverse controlling device;
FIG. 18 is a sequence diagram illustrating a function of managing a visual recognition status of one user in real time or in a form of a log;
FIG. 19 is an explanatory diagram illustrating a concept of integration of traffic controlling systems included in a plurality of the metaverse controlling devices according to example 2;
FIG. 20 is an explanatory diagram of interoperation points set for the traffic controlling systems;
FIG. 21 illustrates an example of an object configuration table for managing objects used in a traffic controlling system of one railway company;
FIG. 22 illustrates an example of an object configuration table for managing objects used in a traffic controlling system of a different railway company;
FIG. 23 is a flowchart illustrating details of an integration object configuration in FIG. 9;
FIG. 24 illustrates a table for managing integrated objects formed by integrating objects used by the one railway company for traffic control and objects used by the different railway company for traffic control; and
FIG. 25 is an explanatory diagram illustrating a display example of integration of traffic controlling systems included in the plurality of metaverse controlling devices.

### DESCRIPTION OF THE PREFERRED EMBODIMENT

An embodiment of the present invention will be hereinafter described with reference to the drawings. According to the present embodiment, controlling devices for controlling running of moving bodies belonging to different organizations are constructed under a metaverse environment to prepare metaverse controlling devices, and the metaverse controlling devices thus prepared are integrated into one integrated metaverse controlling device.

According to the present embodiment, one integrated metaverse controlling device is produced by adding only minimum modifications to existing metaverse controlling devices. The integrated metaverse controlling device thus produced achieves real-time information sharing by linkage in a metaverse environment between metaverse controlling devices operated by respective organizations under the metaverse environment. Accordingly, rapid information sharing is realizable between users belonging to respective organizations even in situations where every second counts, such as a situation where an accident is handled during peak rush hours, and therefore traffic controlling usability and reliability are improvable.

According to the present embodiment, accessible ranges of users allowed to use the integrated metaverse controlling device are managed as well as the realization of real-time information sharing. Each of the users using the integrated metaverse controlling device is allowed to share information only in a necessary range.

According to the present embodiment, an existing metaverse controlling device operated by one organization is connected to an existing metaverse controlling device operated by a different organization to a predetermined level under the metaverse environment. Accordingly, the integrated metaverse controlling device can be obtained without a necessity of high construction costs and high operation costs.

According to the present embodiment, at the time of connection between one metaverse controlling device and a different metaverse controlling device to obtain the integrated metaverse controlling device, functions of the one metaverse controlling device are extended, changed, or limited depending on an access permission of a user using the integrated metaverse controlling device. In other words, the present embodiment provides the integrated metaverse controlling device having specifications different for each user. Accordingly, information unnecessary for users is not shared by these users, and therefore usability for these users improves. Moreover, a range of information sharing is controllable for each of users. Accordingly, an information leak risk decreases.

Note herein that a metaverse controlling device according to present examples presented below is a reproduced actual controlling device within a metaverse as a virtual controlling device. A user such as a traffic controller of a railway company enters the metaverse by using a VR device, and manages train services by using the metaverse controlling device.

The moving bodies are not limited to trains, but may be applied to buses, ships, airplanes, self-propelled robots, and the like.

### [Example 1]

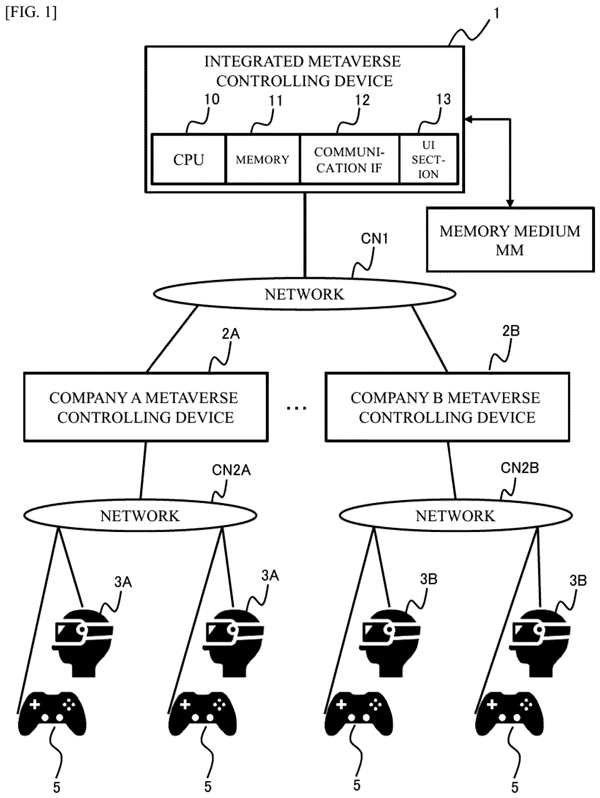

Example 1 will be described with reference to FIGS. 1 to 18. The present example will be explained on an assumption that organizations and moving bodies are railway companies and trains, respectively. Examples of users in the present example include not only traffic controllers of railway companies, but also persons temporarily allowed as users, such as news media persons.

FIG. 1 is a general diagram of an information processing system including an integrated metaverse controlling device 1. For example, this information processing system includes the one integrated metaverse controlling device 1, and a plurality of metaverse controlling devices 2.

The integrated metaverse controlling device 1 is constituted on a computer by utilizing computer resources equipped in the computer. For example, the computer resources include a processor (CPU in the figure) 10, a memory 11, a communication interface (communication IF in the figure) 12, a user interface (UI in the figure) section 13, and others. Note herein that a physical entity corresponding to the integrated controlling device is absent. The integrated metaverse controlling device 1 is a virtual existence produced by connecting the plurality of metaverse controlling devices 2 in an appropriate manner.

The memory 11 stores a predetermined computer program for integrating the plurality of metaverse controlling devices 2. The processor 10 loads and executes the predetermined computer program to implement respective functions of the integrated metaverse controlling device 1. The integrated metaverse controlling device 1 (specifically, a computer equipped with the integrated metaverse controlling device 1) is connected from the communication interface 12 to the plurality of metaverse controlling devices 2 via a communication network CN1 in such a manner as to be bidirectionally communicable with the metaverse controlling devices 2. A manager (not illustrated) who manages the integrated metaverse controlling device 1 is allowed to input information to the integrated metaverse controlling device 1 and acquire information from the integrated metaverse controlling device 1 by using the user interface section 13. The user interface section 13 includes an information input device and an information output device. For example, the information input device includes a keyboard, a switch, a controller, an audio input device, a touch panel, and others. For example, the information output device includes a display, a printer, an audio synthesis device, and others. A device functioning as both the information input device and the information output device may constitute the user interface section 13.

Note that the integrated metaverse controlling device 1 is connectable with a memory medium MM. For example, the memory medium MM is constituted by a memory device, a hard disk device, an optical disk device, a magneto-optical disk device, a magnetic tape device, or the like, and non-temporarily stores computer programs and data. Computer programs and data can be transferred from the memory medium MM to the memory 11 of the integrated metaverse controlling device 1 and stored in the memory 11. Computer programs and data can be transferred from the memory 11 to the memory medium MM and stored in the memory medium MM. A computer program for implementing functions of the integrated metaverse controlling device 1 may be stored in the memory medium MM, and installed in a not-illustrated different computer connected to the memory medium MM to enable the different computer to function as the integrated metaverse controlling device 1.

Each of the metaverse controlling devices 2 is a virtual controlling device constructed on a computer and imitating an actual controlling device (not illustrated). An information exchange portion (a screen, an operation performed for the screen, etc.) for exchanging information between the metaverse controlling device 2 and a user such as a traffic controller is constructed within a metaverse by utilizing computer resources equipped in the computer. The metaverse controlling device 2 acquires information from the actual controlling device and causes the information to be displayed on a virtual display, and also transmits input received from a virtual display or a virtual control console to the actual controlling device.

While FIG. 1 illustrates a railway company A and a railway company B as a plurality of organizations by way of example, the integrated metaverse controlling device 1 may integrate the metaverse controlling devices 2 of not only these two companies but also a larger number of organizations individually for each user as will be described below. For convenience of explanation, the railway company A will be referred to a company A (or may be also referred to as a first organization or a first railway company, or one organization or one railway company), and the railway company B will be referred to as a company B (or may be also referred to as a second organization or a second railway company, or a different organization or a different railway company).

Note herein that a metaverse controlling device of the company A will be given a reference number "2A," and that a metaverse controlling device of the company B will be given a reference number "2B." When distinction between the railway companies is unnecessary, the respective metaverse controlling devices will be referred to as the metaverse controlling devices 2. Each of the companies will be also referred to as a company X as a generalized expression.

Users 3A and 3B are connected to the metaverse controlling devices 2A and 2B of the respective companies via VR devices 5, respectively. As described above, the users 3A and 3B are chiefly employees (traffic controllers) of the respective railway companies. The respective users will be referred to as users 3 when distinction is unnecessary. Each of the VR devices 5 includes not only what is called a handheld controller, but also goggles attached to a head portion.

The VR devices 5 used by a plurality of the users 3A are connected to the metaverse controlling device 2A of the company A via a communication network CN2A. Similarly, the VR devices 5 used by a plurality of the users 3B are connected to the metaverse controlling device 2B of the company B via a communication network CN2B.

The communication networks CN2A and CN2B will be referred to as communication networks CN2 when distinction is unnecessary. The communication networks CN1 and CN2 may be provided either by an identical network, or by different networks.

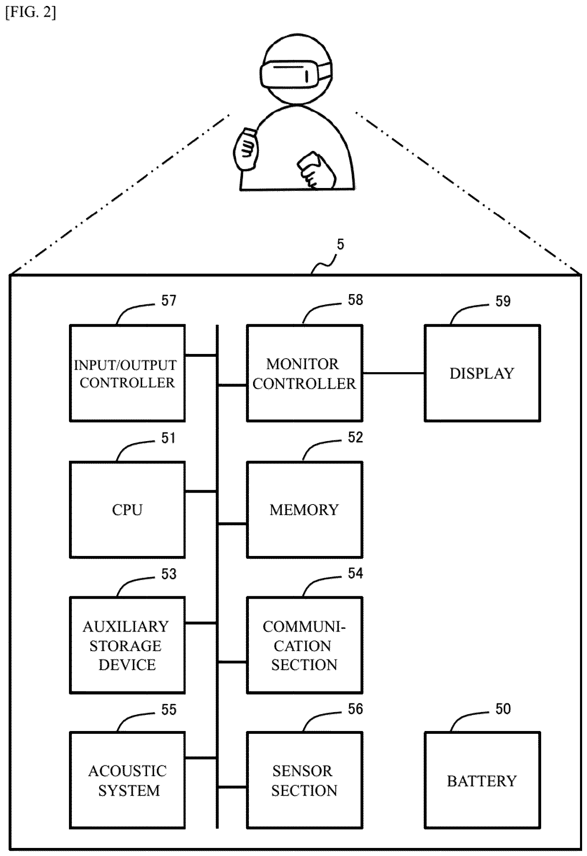

FIG. 2 is a configuration diagram of the VR device 5. The VR device 5 is attached to the user 3 to provide activities in the metaverse to the user 3.

For example, the VR device 5 includes a processor 51, a memory 52, an auxiliary storage device 53, a communication section 54, an acoustic system 55, a sensor section 56, an input/output controller 57, a monitor controller 58, a display 59, a battery 50, and others. While the processor is expressed as a CPU in the figure, the processor is not limited to a CPU. The processor may include a graphics processing unit (GPU), an application specific integrated circuit (ASIC), or others.

The memory 52 and/or the auxiliary storage device 53 stores a predetermined computer program for implementing functions as the VR device 5. The processor 51 executes the predetermined computer program to implement functions for providing the metaverse to the user.

The communication section 54 communicates with the metaverse controlling device 2 via the communication network CN2. The acoustic system 55 includes a microphone and a speaker to transmit to the user audio received from a different user using the metaverse controlling device 2, and transmit audio received from the user to the different user. For example, the metaverse controlling device 2 is capable of outputting various types of sounds such as warning sounds, warning messages, and calls.

The sensor section 56 includes a sensor group for detecting various states of the VR device 5, and transmits detection signals generated by the sensor group to the metaverse controlling device 2. The detection signals generated by the sensor group may be transmitted to the metaverse controlling device 2 without change, or may be processed in any manner before transmitted to the metaverse controlling device 2. For example, the sensor group includes a global positioning system (GPS) sensor, an acceleration sensor, a gyro sensor, a vibration sensor, a visual line detection sensor, and a temperature sensor.

The input/output controller 57 acquires a signal corresponding to an operation performed by the user, and transmits the acquired signal to the metaverse controlling device 2. For example, the input/output controller 577 includes a button, a track pad, and a joystick.

The monitor controller 58 outputs a video signal to the display 59 disposed before the eyes of the user to provide the metaverse controlling device 2 to the user.

The battery 50 supplies predetermined power to the respective sections 51 to 59 of the VR device 5. The battery 50 may be built in a VR headset, or may be provided separately from the VR headset and attached to the user 3.

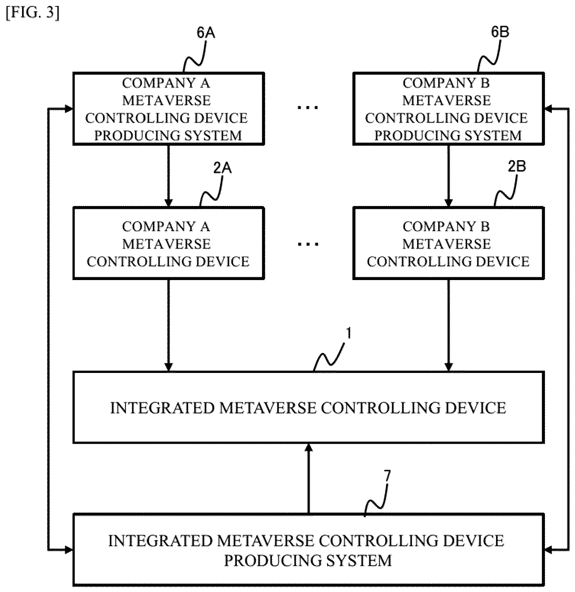

FIG. 3 illustrates an example of a relation between the integrated metaverse controlling device 1 and the metaverse controlling devices 2. The integrated metaverse controlling device 1 is produced by an integrated metaverse controlling device producing system 7 configured to produce the integrated metaverse controlling device 1. The metaverse controlling device 2A of the railway company A is produced by a metaverse controlling device producing system 6A. Similarly, the metaverse controlling device 2B of the railway company B is produced by a metaverse controlling device producing system 6B.

The metaverse controlling devices 2A and 2B of the respective companies can be independently produced by the associated producing systems 6A and 6B, respectively. In this case, the integrated metaverse controlling device 1 integrates the metaverse controlling devices 2A and 2B having different specifications to a predetermined level (organization unit, group unit, line unit, etc.).

Meanwhile, the metaverse controlling device producing systems 6A and 6B may be produced on the basis of specifications of the integrated metaverse controlling device producing system 7. In this case, the integrated metaverse controlling device 1 is capable of more easily integrating the metaverse controlling devices 2A and 2B on the basis of common basic design. Either of these methods may be employed in the present example.

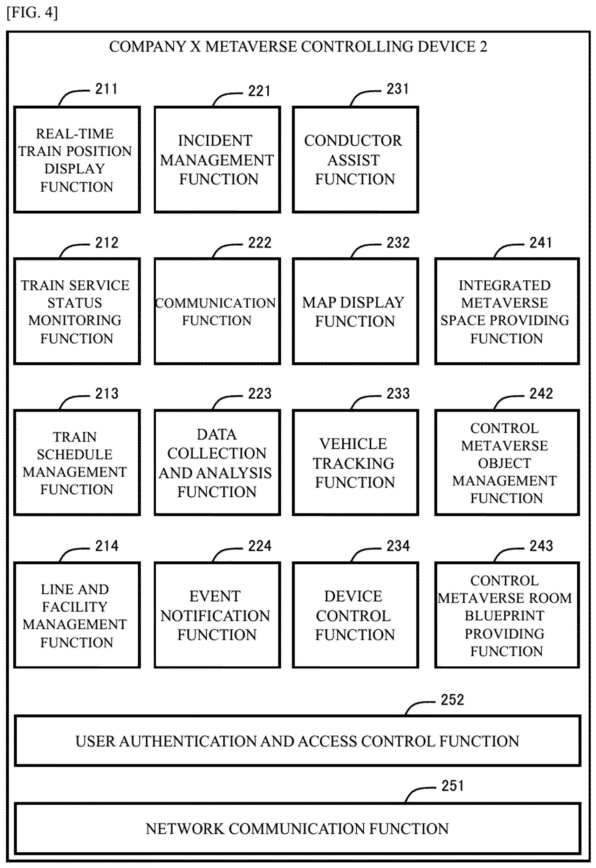

FIG. 4 is a functional configuration diagram of the metaverse controlling device 2. For example, the metaverse controlling device 2 includes a real-time train position display function 211, a train service status monitoring function 212, a train schedule management function 213, a line and facility management function 214, an incident management function 221, a communication function 222, a data collection and analysis function 223, an event notification function 224, a conductor assist function 231, a map display function 232, a vehicle tracking function 233, a device control function 234, an integrated metaverse space providing function 241, a control metaverse object management function 242, a control metaverse room blueprint providing function 243, a network communication function 251, and a user authentication and access control function 252.

The real-time train position display function 211 is a function of displaying current positions of trains in real time.

The train service status monitoring function 212 is a function of monitoring service statuses, delays, and the like of trains, and notifying a traffic controller of these.

The train schedule management function 213 is a function of managing service schedules of trains, and achieving appropriate train service adjustment. The train schedule management function 213 is also capable of controlling signals on lines.

The line and facility management function 214 is a function of managing lines and facilities such as stations and platforms, and planning maintenance and repair.

The incident management function 221 is a function of managing incidents such as train accidents and failures, and appropriately handing these incidents.

The communication function 222 is a function of chat, voice call, and the like for providing communication between traffic controllers, and communication between train drivers and traffic controllers.

The data collection and analysis function 223 is a function of collecting and analyzing data of train services to contribute to improvement of service efficiency and safety.

The event notification function 224 is a function of giving notifications of important events affecting train services, and alerts.

The conductor assist function 231 is a function of assisting conductors to contribute to passenger services and safety inside trains.

The map display function 232 is a function of causing maps of train lines, stations, and facilities to be displayed to enable traffic controllers to recognize positions and routes of trains.

The vehicle tracking function 233 is a function of tracking vehicle information and states associated with respective trains to contribute to train service management.

The device control function 234 is a function of controlling traffic lights, points, and the like to manage train services.

The network communication function 251 is a function of communicating with other devices (e.g., VR device 5).

The user authentication and access control function 252 manages accounts of traffic controllers, and controls accesses depending on permissions.

The integrated metaverse space providing function 241 is a function of providing data for integrating virtual spaces provided by the different metaverse controlling devices 2, and reconstituting these virtual spaces into one metaverse. The function 241 seamlessly integrates different virtual spaces and systems. The function 241 therefore enables the user to transparently move between the different metaverse controlling devices 2, and synchronizes an avatar and content used by the user in an integrated environment to provide a consistent experience for the user.

The control metaverse object management function 242 is a function of managing objects used by the metaverse controlling device 2. The metaverse controlling device 2 (virtual control room) is required to manage objects and resources within a virtual space. The function 242 provides centralized management of objects and resources used by the respective metaverse controlling devices 2, and appropriately arranges and manages object groups in an integrated virtual space. For example, the function 242 is capable of integrating objects such as a building of the control room, scenery, and an avatar, and providing these objects to the user in an organized state.

The control metaverse room blueprint providing function 243 is a function of providing a blueprint of the metaverse controlling device 2 to the integrated metaverse controlling device 1. Design information is required to integrate a plurality of the metaverse controlling devices 2 into one unit when each of the metaverse controlling devices 2 has a customized virtual space or system. The function 243 collects blueprints and structures of the virtual spaces of the respective metaverse controlling devices 2, and provides an integrated blueprint for integrating the collected blueprints and structures into one unit.

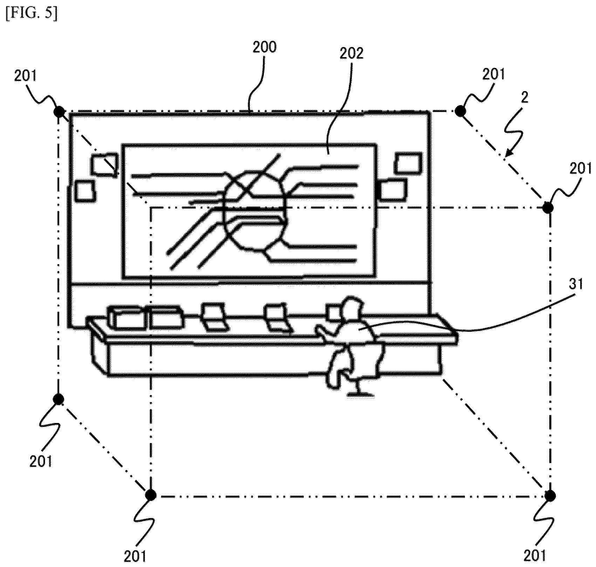

FIG. 5 is an explanatory diagram of design information associated with the metaverse controlling device 2. The metaverse controlling device 2 includes a control room 200 provided in a virtual space. A display 202, an avatar 31 of the traffic controller 3, and others are arranged within the control room 200.

Note herein that information essential for integration of the plurality of metaverse controlling devices 2 produced as devices having different specifications includes a floor area, vertical and horizontal sizes, a height size, sizes and positions of openings (window, door, etc.), coordinates of intersections 201 possibly forming connection portions, and the like of each of the metaverse controlling devices 2. A body height of the avatar 31 of the traffic controller 3 in the metaverse is designated as a reference height set in advance, and values of the respective sizes are adjusted based on the reference height. In this manner, the spaces (traffic rooms) 200 of the different metaverse controlling devices 2 can be connected to each other without inconsistency.

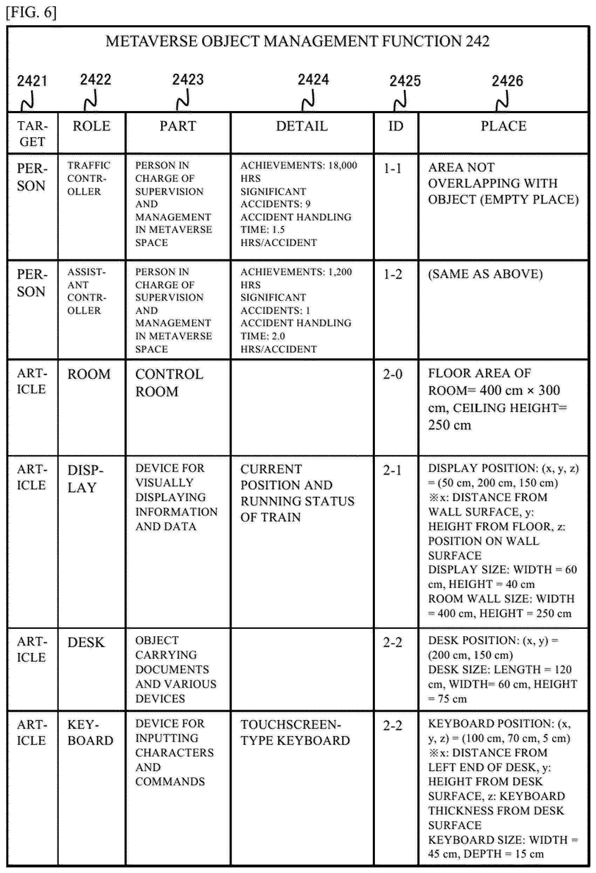

FIG. 6 illustrates an example of the control metaverse object management function 242 which manages objects used by the metaverse controlling device 2.

For example, the management function 242 manages an object on the basis of items such as a target 2421, a roll 2422, a part 2423, a detail 2424, an ID (identification information) 2425, and a place 2426.

The target 2421 indicates a target category of the object. Examples of the target category include a person and an article. The roll 2422 indicates a classification name of the object classified for each of rolls. Examples of the roll include a traffic controller, an assistant controller, a room, a display, a desk, and a keyboard. The part 2423 is information indicating a part played by the object.

The detail 2424 provides supplementary explanation of the object. For example, an object "traffic controller" includes an actual work time as a traffic controller, the number of cases handling significant accidents, and an average time required for handling one accident. For example, when a traffic controller of the one railway company A desires to access the metaverse controlling device 2B of the different railway company B, a person in charge of management of access permissions of the metaverse controlling device 2B of the company B can determine whether to give an access permission on the basis of the "detail" associated with the traffic controller of the company A. For example, "detail" of "display" presents a current position and a moving status of a train, a vehicle signal state, schedule and train service information, failure and delay information, and communication and notification information.

The ID 2425 is information for uniquely identifying the object. The place 2426 indicates a place where the object can be placed in the metaverse. An avatar imitating a person such as a traffic controller may be disposed at any position not interfering with other objects. Setting positions of article objects (display, window, desk, keyboard, etc.) are clearly specified.

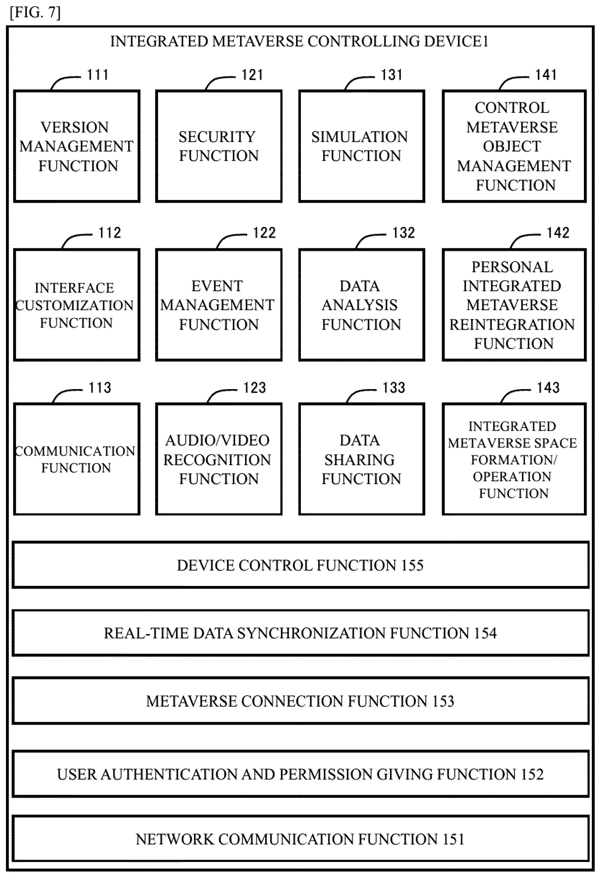

FIG. 7 is a functional configuration diagram of the integrated metaverse controlling device 1. For example, the integrated metaverse controlling device 1 includes a version management function 111, an interface customization function 112, a communication function 113, a security function 121, an event management function 122, an audio/video recognition function 123, a simulation function 131, a data analysis function 132, a data sharing function 133, a control metaverse object management function 141, a personal integrated metaverse reintegration function 142, an integrated metaverse space formation/operation function 143, a network communication function 151, a user authentication and permission giving function 152, a metaverse connection function 153, a real-time data synchronization function 154, and a device control function 155.

The version management function 111 is a function of managing changes and updates of the metaverse space, and restoring a previous state.

The interface customization function 112 is a function of enabling traffic controllers to customize interfaces according to individual needs and environments. The communication function 113 is a function of chat, voice call, and the like for establishing real-time communication between traffic controllers, and real-time communication between traffic controllers and other persons involved.

The security function 121 is a function of managing accesses to highly confidential data and systems to ensure information safety.

The event management function 122 is a function of managing events and alerts produced in the respective integrated metaverse controlling devices 2, and notifying traffic controllers of these events and alerts.

The audio/video recognition function 123 is a function of recognizing audio and video. Traffic controllers can issue audio commands and instructions within the metaverse.

The simulation function 131 is a function of executing train service simulations and abnormal state simulations of trains to offer abnormality handling and training for traffic controllers. While not illustrated in the figure, the integrated metaverse controlling device 1 may have a report creation function. The report function is a function of creating a report on the basis of train service data, event logs, and the like, and providing the created report to managers or persons involved.

The data analysis function 132 is a function of collecting data within the metaverse space, analyzing the collected data, and evaluating train service statuses and system performance.

The data sharing function 133 is a function of enabling traffic controllers to share data and information within the metaverse space, and carry out cooperative work.

The control metaverse object management function 141 is a function of managing objects used by the integrated metaverse controlling device 1.

The personal integrated metaverse reintegration function 142 is a function of providing the integrated metaverse controlling device 1 for each of traffic controllers of the respective companies. Specifically, the integrated metaverse controlling device 1 integrates the metaverse controlling devices 2 of the respective companies and also adjusts an access range for each of the traffic controllers, and then provides the integrated metaverse controlling devices 1 adjusted for each of the traffic controllers.

The integrated metaverse space formation/operation function 143 is a function of forming a space of the integrated metaverse controlling device 1, and operating the formed space.

The network communication function 151 is a function of communicating with the respective metaverse controlling devices 2 via the communication network CN1.

The user authentication and permission giving function 152 is a function of managing accounts and access permissions of traffic controllers to achieve user authentication and management between the respective integrated metaverse controlling devices 2.

The metaverse connection function 153 is a function of integrating a plurality of the metaverse controlling devices 2, and enabling traffic controllers each having an access permission to access the respective metaverse controlling devices 2.

The real-time data synchronization function 154 is a function of synchronizing information associated with the respective integrated metaverse controlling devices 2 (the control rooms corresponding to the metaverse spaces) in real time to share data such as positions and service statuses of trains.

The device control function 155 is a function of controlling devices and apparatuses used within the metaverse space. For example, the device control includes control of traffic lights and sensors.

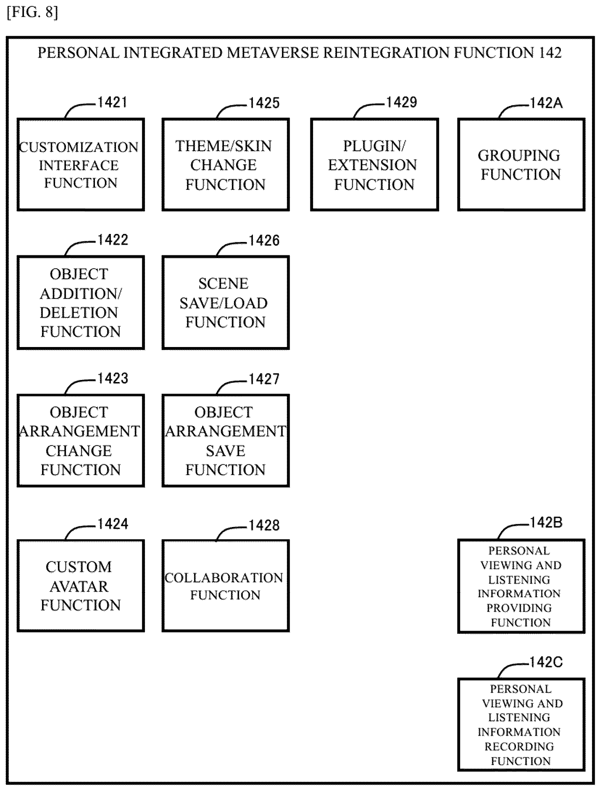

FIG. 8 illustrates details of the personal integrated metaverse reintegration function 142 in FIG. 7. For example, the reintegration function 142 includes a customization interface function 1421, an object addition/deletion function 1422, an object arrangement change function 1423, a custom avatar function 1424, a theme/skin change function 1425, a scene save/load function 1426, an object arrangement save function 1427, a collaboration function 1428, a plugin/extension function 1429, a grouping function 142A, a personal viewing and listening information providing function 142B, and a personal viewing and listening information recording function 142C.

The customization interface function 1421 is a function of providing an interface through which a user customizes an external appearance and a layout of the metaverse space.

The object addition/deletion function 1422 is a function of enabling each user to add a new object and delete an existing object to and from the metaverse space.

The object arrangement change function 1423 is a function of enabling each user to change arrangement of objects in the metaverse space. This function enables each user to adjust the metaverse according to preferences and needs of the company of the user.

The custom avatar function 1424 is a function of enabling each user to customize an avatar of the user, and change an external appearance and an action of the avatar within the metaverse space.

The theme/skin change function 1425 is a function of enabling each user to change a theme and a skin of the metaverse space to customize an external appearance of the metaverse space.

The scene save/load function 1426 is a function of enabling each user to save a scene of the metaverse space created by the user, and share the scene with other users.

The object arrangement save function 1427 is a function of saving arrangement information associated with objects within the metaverse.

The collaboration function 1428 is a function of enabling a plurality of users to simultaneously edit the metaverse space and carry out cooperative work.

The plugin/extension function 1429 is a function of enabling each user to add various plugin and extension functions to the metaverse space to extend functions.

The grouping function 142A is a function of creating a group by collecting concerned persons belonging to not only the same company but also different companies. Examples of this group include a line unit group, an accident handling group, a manager group, and a news media group.

The personal viewing and listening information providing function 142B is a function of providing information viewed and listened to by an avatar of one user within the metaverse to a different user. For example, a person in charge of security of one railway company is allowed to monitor, substantially in real time, information viewed and listened to by a user of a different company.

The personal viewing and listening information recording function 142C is a function of recording information viewed and listened to by an avatar of one user within the metaverse.

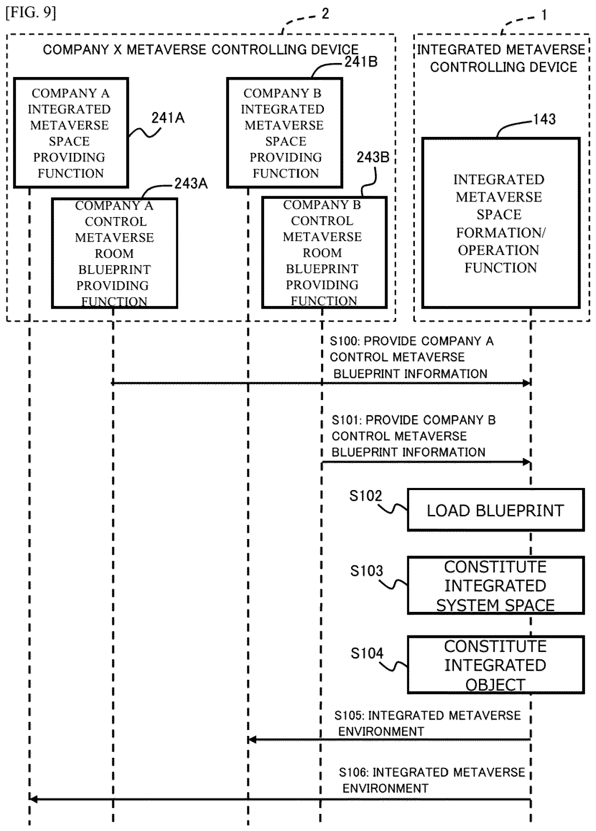

FIG. 9 illustrates a process for integrating a plurality of the metaverse controlling devices 2 into one unit. Each of the plurality of metaverse controlling devices 2 will be referred to as a company X metaverse controlling device 2. Described herein will be integration of the metaverse controlling device 2A of the company A, and the metaverse controlling device 2B of the company B. The description presented below is applicable to integration of the metaverse controlling devices 2 of three or more companies into one unit.

Blueprint information associated with the metaverse controlling device 2A of the company A is provided to the integrated metaverse space formation/operation function 143 from a control metaverse room blueprint providing function 243A of the company A (S100), while blueprint information associated with the metaverse controlling device 2B of the company B is also provided to the integrated metaverse space formation/operation function 143 from the control metaverse room blueprint providing function 243B of the company B (S101). The respective blueprints may be provided in any order.

The integrated metaverse space formation/operation function 143 loads the blueprint information associated with the respective control metaverse rooms (S102), and integrates control rooms of the respective metaverse controlling devices 2A and 2B on the basis of the blueprint information indicating the respective rooms (S103) to constitute integrated objects (S104).

The integrated metaverse space formation/operation function 143 provides a constituted integrated metaverse environment to the integrated metaverse space providing function 241B of the company B and the integrated metaverse space providing function 241A of the company A (S105, S106). The integrated metaverse environment may be provided in any order.

As a result, the traffic controller using the metaverse controlling device 2A of the company A is allowed to access the metaverse controlling device 2B of the company B within a necessary range via the integrated metaverse space. Similarly, the traffic controller using the metaverse controlling device 2B of the company B is allowed to access the metaverse controlling device 2A of the company A within a necessary range via the integrated metaverse space.

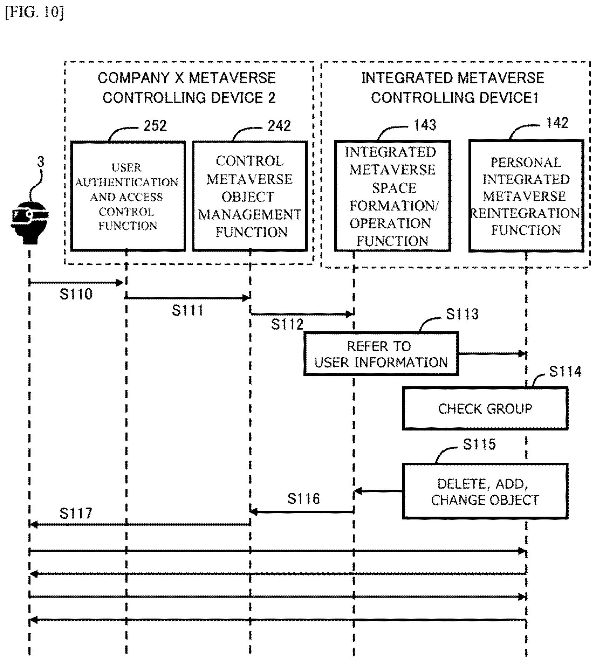

FIG. 10 is a sequence diagram illustrating an access control process. When the user 3 such as a traffic controller logs in to use the metaverse controlling device 2 of the company of the user 3 (S110), the user authentication and access control function 252 executes user authentication. If the user authentication is successful (S111), the control metaverse object management function 242 requests the integrated metaverse space formation/operation function 143 of the integrated metaverse controlling device 1 to form an integrated metaverse (S112).

The integrated metaverse space formation/operation function 143 refers to information associated with the user 3 desiring access (S113), and requests the personal integrated metaverse reintegration function 142 to reintegrate the integrated metaverse to form an integrated metaverse dedicated for the user 3.

The personal integrated metaverse reintegration function 142 checks information associated with a group to which the user 3 belongs (S114), and arranges objects corresponding to the identified group in the integrated metaverse space (S115). For this purpose, the personal integrated metaverse reintegration function 142 deletes, adds, or changes the objects. In this manner, an integrated control metaverse is provided according to the group to which the user 3 belongs (S115, S117).

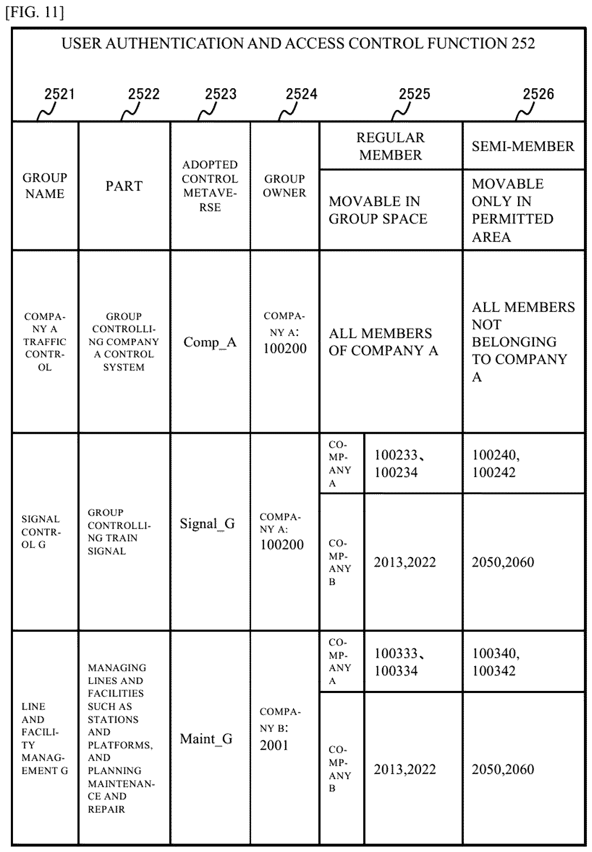

FIG. 11 illustrates an example of the user authentication and access control function 252. For example, the function 252 manages items such as a group name 2521, a part 2522, an adopted control metaverse 2523, a group owner 2524, a regular member 2525, and a semi-member 2526.

For example, the group name 2521 indicates a group classified by company such as "company A traffic control," or a group of users in charge of a specific role such as "signal control G" and "line and facility management G." The part 2522 indicates a part played by the corresponding group. The adopted control metaverse 2523 is information for identifying a metaverse controlling device adopting the group. The group owner 2524 is information for identifying a user having an ownership of the group. The regular member 2525 is information for identifying a user allowed to freely move in the control metaverse space owned by the group. The semi-member 2526 is information for identifying a user allowed to move in the control metaverse space owned by the group except for a part of the space. For example, a user allowed to enter the control metaverse for a short time, such as a person of news media, is a semi-member.

Focusing on the regular member 2525 of "signal control G" and "line and facility management G" herein, the regular member 2525 includes IDs of users belonging to a different company. "Signal control G" for which the company A has a management privilege (ownership) includes not only users of the company A but also users of the company B. Accordingly, users (traffic controllers) of the company A and users (traffic controllers) of the company B are both allowed to be in charge of specific signal control in cooperation with each other. "Line and facility management G" for which the company B has a management privilege includes, as regular members, not only users of the company B but also users of the company A. Accordingly, users of the company A and users of the company B are both allowed to be in charge of specific lines and facilities in cooperation with each other.

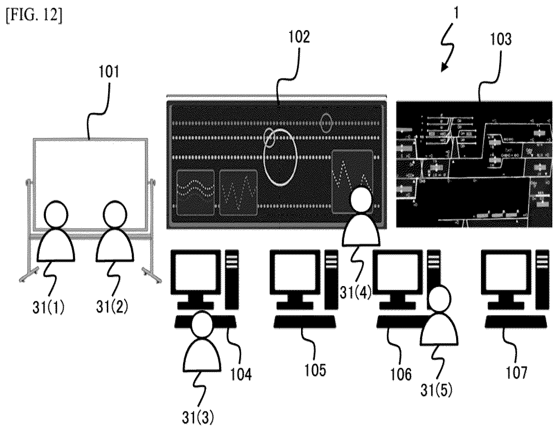

FIG. 12 is a schematic diagram illustrating a state of the integrated metaverse controlling device 1. In the state of integration of a plurality of the metaverse controlling devices 1, a plurality of displays 101, 102, and 103, a plurality of consoles 104, 105, 106, and 107, and other avatars 31(1) to 31(5) are visible for a user without limitation as illustrated in FIG. 12.

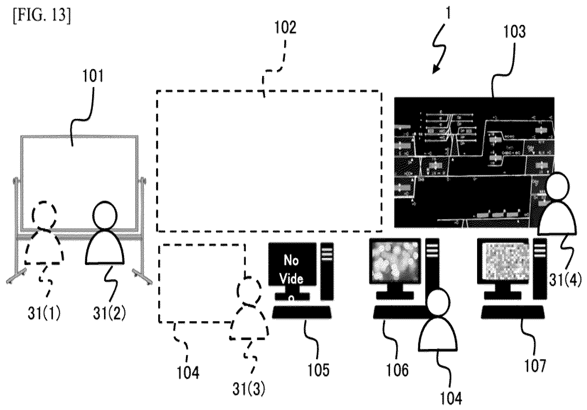

FIG. 13 illustrates a configuration change of the integrated metaverse controlling device 1 depending on an access permission difference between users. The integrated metaverse controlling device 1 controls the configuration of the integrated metaverse controlling device 1 depending on access permissions of users, and therefore does not provide a part of the configuration indicated by dotted lines in FIG. 13 for certain users.

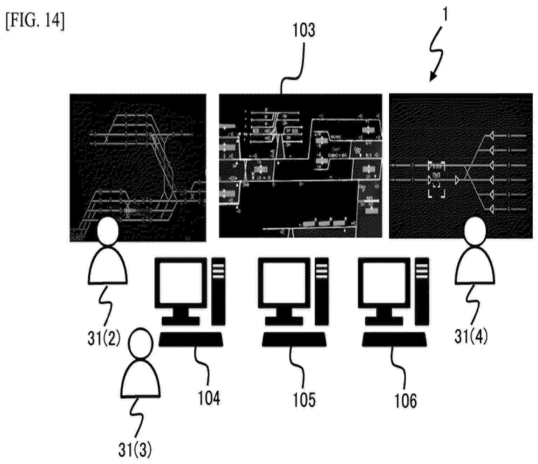

FIG. 14 illustrates a state of collection and integration of only a specific system of a plurality of systems included in each of the metaverse controlling devices 2. For example, FIG. 14 depicts a state of collection and integration of only a traffic control system of the systems included in each of the metaverse controlling devices 2 of the respective companies. Only the traffic controller in charge of the traffic control system in each of the companies is allowed to view and operate a status of the traffic control system to be interoperated.

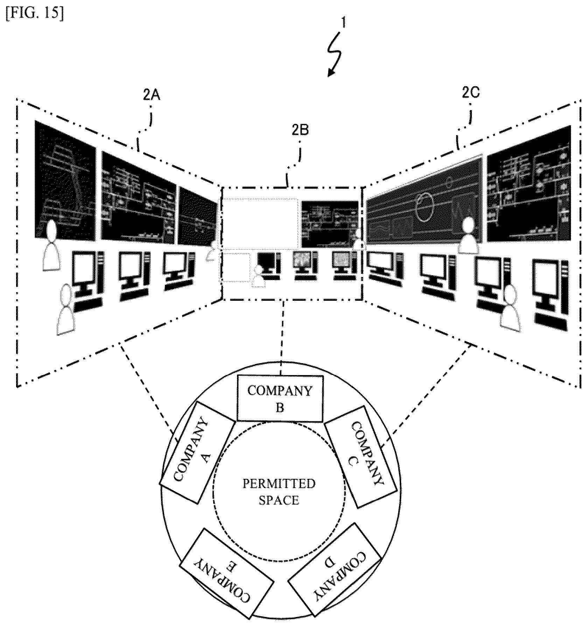

FIG. 15 illustrates a state where a plurality of the metaverse controlling devices 2 are successively connected to produce the integrated metaverse controlling device 1. For example, the metaverse controlling devices 2 provided for each of railway companies may be arranged in an annular shape or a polygonal shape. A user having entered an accessible space formed inside each of the metaverse controlling devices 2 is allowed to view and listen to information displayed by the metaverse controlling device 2 accessible by the user, and operate the information. FIG. 15 illustrates a state of connection between the three metaverse controlling devices 2A to 2C in the five metaverse controlling devices 2.

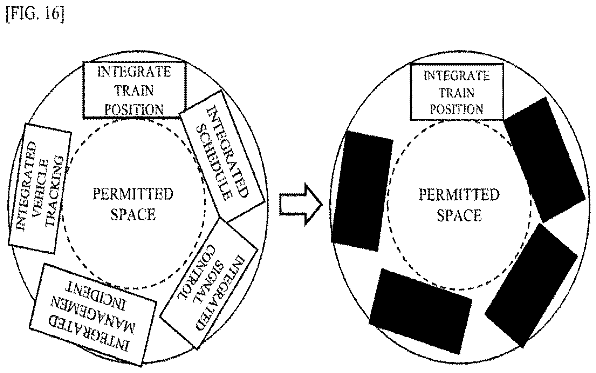

As illustrated in FIG. 16, integration may be made for each of a plurality of systems (functions) included in each of the plurality of metaverse controlling devices 2. A left part of FIG. 16 illustrates an example of a case where only real-time train position systems of the respective metaverse controlling devices 2 are integrated into one unit, a case where only train schedule management functions of the respective metaverse controlling devices 2 are integrated into one unit, a case where only signal control functions of the respective metaverse controlling devices 2 are integrated into one unit, a case where only incident management functions of the respective metaverse controlling devices 2 are integrated into one unit, and a case where only vehicle tracking functions of the respective metaverse controlling devices 2 are integrated into one unit. The function names are simplified in FIG. 16.

As illustrated in a right part of FIG. 16, a user permitted to access only the real-time train position system is not permitted to access (view and listen to or operate) other systems.

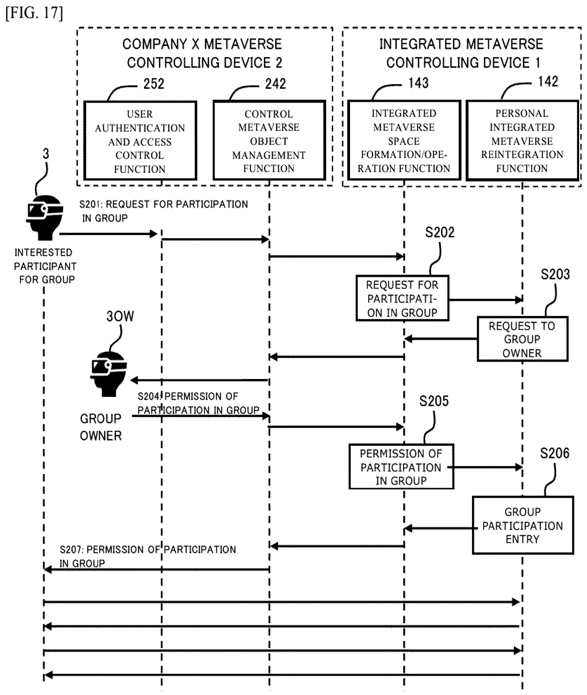

FIG. 17 is a sequence diagram illustrating a process for enabling only a user permitted by a group owner to browse the integrated metaverse controlling device.

When the user 3 who desires to participate in a certain group (hereinafter also referred to as interested participant 3) accesses the metaverse controlling device 2 of the company of the user 3 (S201), the user authentication and access control function 252 executes user authentication of the interested participant 3.

If the user authentication of the interested participant 3 is successful, the request for participation in the group is transmitted to the integrated metaverse space formation/operation function 143 of the integrated metaverse controlling device 1 via the control metaverse object management function 242 (S202).

The personal integrated metaverse reintegration function 142 determines whether participation of the interested participant 3 in the group has been already permitted. If not permitted, notification of this request for participation in the group is issued to a group owner 3OW corresponding to an owner of the group (S203).

When the group owner 3OW permits the interested participant 3 to participate in the group (S204), the integrated metaverse space formation/operation function 143 permits the interested participant 3 to participate in the group (S205), and notifies the personal integrated metaverse reintegration function 142 of this permission.

The personal integrated metaverse reintegration function 142 records the fact that the interested participant 3 has been permitted to participate in the group, and notifies the interested participant 3 of this recording (S207).

Note that the group owner 3OW may set conditions for participation in the group. For example, the conditions include permission of participation in the group for only a fixed period, non-permission of comments, and prohibition of image copying.

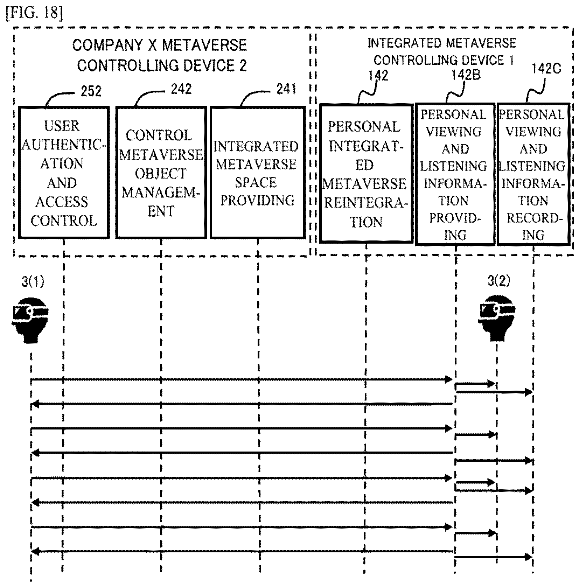

FIG. 18 is a sequence diagram illustrating a function of enabling a different user 3(2) to check a visual recognition status of one user 3(1) in real time.

For example, the different user 3(2), such as a manager, can monitor a viewing and listening state of the one user 3(1) in real time to ensure reliability and security. The different user 3(2) as a manager can also check what the user 3(1) views and listens to, and when this viewing and listening takes place, for example, by using the personal viewing and listening information recording function 142C described with reference to FIG. 8.

According to the present example configured as above, controlling devices for controlling train services of different railway companies can be converted into metaverse controlling devices to prepare the metaverse controlling device 2, and the respective metaverse controlling devices 2 are integrated into the one integrated metaverse controlling device 1.

According to the present example, the one integrated metaverse controlling device 1 can be produced by only minimum modifications of the existing metaverse controlling devices 2. In addition, information can be shared in real time by linking the respective metaverse controlling devices 2. Accordingly, usability and reliability can be improved.

According to the present example, accessible ranges of users allowed to use the integrated metaverse controlling device 1 are managed as well as the realization of real-time information sharing. Accordingly, users using the integrated metaverse controlling device 1 are allowed to share information only in necessary ranges. Accordingly, the integrated metaverse controlling device 1 can maintain sufficient security, and enhance reliability.

According to the present example, the existing metaverse controlling device is connected to the different existing metaverse controlling device in a predetermined level (function unit, system unit, organization unit, group unit, etc.). Accordingly, the integrated metaverse controlling device can be produced at reduced construction costs and operation costs.

According to the present example, functions of the metaverse controlling device can be extended, changed, and limited depending on access permissions of users. Accordingly, specifications of the integrated metaverse controlling devices can be varied for each of the users. Accordingly, information unnecessary for users is not shared by these users, and therefore usability improves for these users. Moreover, control of the information sharing range for each of users can decrease information leak risks.

According to the present example, a user such as a manager can check a viewing and listening status of a traffic controller of a different company or a user allowed to temporarily participate, for example, in real time or on the basis of a log. Accordingly, reliability and security can be further improved.

### [Example 2]

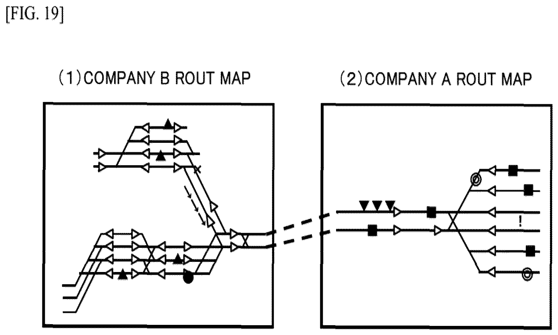

Example 2 will be described with reference to FIGS. 19 to 25. Integrated objects will be generated in the present example described herein.

FIG. 19 illustrates a concept of integration of traffic controlling systems included in a plurality of the metaverse controlling devices 2. Described will be a case of connection between a route map of the company B illustrated in a left part, and a route map of the company A illustrated in a right part on an assumption that specific lines are interoperated between the railway company A and the railway company B.

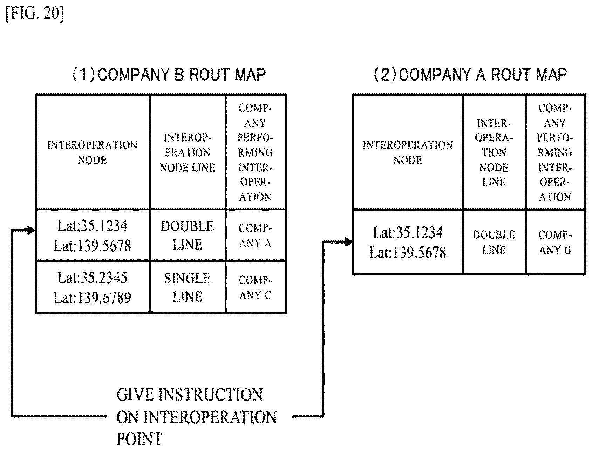

FIG. 20 is an explanatory diagram of interoperation points set for the traffic controlling systems. Information associated with interoperation nodes in the route map of the company B includes coordinates, distinction between a single line and a double line, and a name of a company performing interoperation, for example. Information associated with interoperation nodes in the route map of the company A includes similar items. For setting interoperation, a traffic controller corresponding to a user gives an instruction on interoperation points.

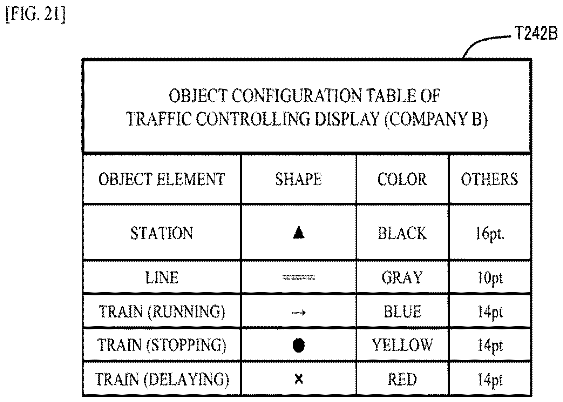

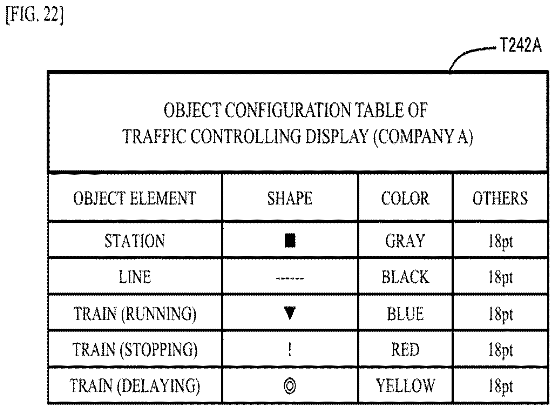

FIG. 21 illustrates an example of an object configuration table T242B for managing objects used in the traffic controlling system of the company B. FIG. 22 illustrates an example of an object configuration table T242A used in the traffic controlling system of the company A.

Each of the object configuration tables T242B and T242A includes items such as "object element," "shape," "color," and "others."

The item "object element" indicates respective elements such as stations, lines, and trains displayed on the route map. The item "train" may be classified into train states such as running, stopping, and delaying.

The item "shape" indicates shapes of objects to be displayed. The item "color" indicates colors of the objects. The item "others" indicates font sizes of objects containing characters. Not only static objects but also dynamic objects may be used.

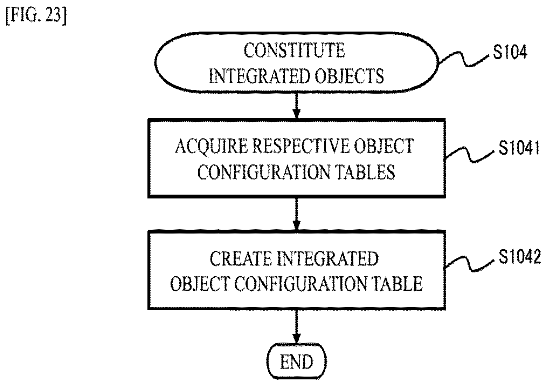

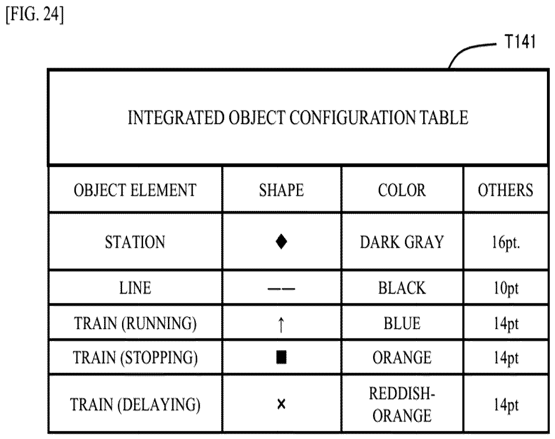

FIG. 23 illustrates details of the integrated object configuration step S104 in FIG. 9. The integrated metaverse space formation/operation function 143 acquires the respective object configuration tables T242B and T242A associated with interoperation (S1041), and creates an integrated object configuration table T141 described below with reference to FIG. 24 (S1042).

The integrated object configuration table T141 illustrated in FIG. 24 includes items such as "object element," "shape," "color," and "others." Details of the respective items are similar to those described with reference to FIGS. 21 and 22.

The values of "shape," "color," and "others" of the integrated objects used by the integrated metaverse controlling device 1 are set to values different from those of the objects used by the respective metaverse controlling devices 2 to be integrated. For example, the colors of the integrated object elements may be intermediate colors between the colors of the respective object elements used by the metaverse controlling devices 2.

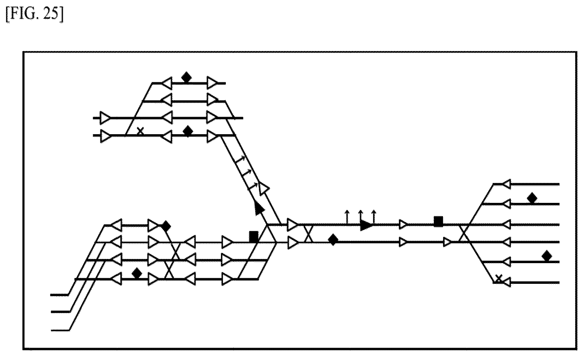

FIG. 25 illustrates a display example of integration of traffic controlling systems included in a plurality of the metaverse controlling devices 2.

Note that the present invention is not limited to the examples described above, but includes various modifications. For example, the examples presented above have been described in detail only for easy understanding of the present invention. Accordingly, all of the configurations described above are not necessarily required. Moreover, a part of configurations of one example may be replaced with configurations of a different example, and configurations of a different example may be added to configurations of one example. Furthermore, other configurations may be added to a part of configurations of each of examples, and a part of configurations of each of examples may be eliminated or replaced. In addition, respective examples may be combined in appropriate manners to an extent not in apparent conflict with each other.

The present embodiment includes configurations having following aspects.

(Configuration 1) An information processing apparatus for integrating controlling operations with use of a metaverse environment, the apparatus including: a processor; a memory used by the processor; and a communication interface used by the processor. Controlling devices for controlling running of moving bodies belonging to a plurality of organizations are metaverse controlling devices provided in the metaverse environment. The processor, by executing a predetermined computer program stored in the memory, acquires design information associated with the metaverse controlling devices via the communication interface, stores the acquired design information in the memory, constitutes an integrated metaverse by connecting the metaverse controlling devices in a predetermined level on the basis of the acquired design information associated with the respective metaverse controlling devices, and arranges objects used by the metaverse controlling devices in the integrated metaverse.

(Configuration 2) The integrated metaverse controlling device according to configuration 1, in which the objects used by the metaverse controlling devices are integrated and arranged in the integrated metaverse.

(Configuration 3) The integrated metaverse controlling device according to any one of configurations 1 and 2, in which each of the metaverse controlling devices has a plurality of functions, and the predetermined level is associated with a predetermined function selected from the plurality of functions.

(Configuration 4) The integrated metaverse controlling device according to any one of configurations 1 to 3, in which the metaverse controlling devices are used by a plurality of organizations, and the predetermined level is associated with a predetermined organization selected from the plurality of organizations.

(Configuration 5) The integrated metaverse controlling device according to any one of configurations 1 to 4, in which the metaverse controlling devices are used by a plurality of groups, and the predetermined level is associated with a predetermined group selected from the plurality of groups.

(Configuration 6) The integrated metaverse controlling device according to any one of configurations 1 to 5, further including an access control section that controls an access to an object in the integrated metaverse.

(Configuration 7) The integrated metaverse controlling device according to any one of configurations 1 to 6, in which a source metaverse that contains a source metaverse controlling device included in the metaverse controlling devices is connected to a destination metaverse that contains a destination metaverse controlling device to extend the source metaverse.

(Configuration 8) The integrated metaverse controlling device according to any one of configurations 1 to 7, in which a function of checking a visual recognition status of a user in real time or on the basis of a log is provided.

(Configuration 9) An information processing method of, by a computer, integrating controlling operations with use of a metaverse environment, controlling devices that control running of moving bodies belonging to a plurality of organizations being implemented by metaverse controlling devices provided in the metaverse environment, the computer including a processor, a memory used by the processor, and a communication interface used by the processor, the method including: by the processor, by executing a predetermined computer program stored in the memory, acquiring design information associated with the metaverse controlling devices; constituting an integrated metaverse by connecting the metaverse controlling devices in a predetermined level on the basis of the acquired design information associated with the respective metaverse controlling devices; and arranging objects used by the metaverse controlling devices in the integrated metaverse.

(Configuration 10) The integrated control metaverse producing method according to configuration 9, in which, in arranging the objects used by the metaverse controlling devices in the integrated metaverse, the objects used by the metaverse controlling devices are integrated and arranged.

## Claims

1. An information processing apparatus (1) for integrating controlling operations with use of a metaverse environment, the apparatus comprising:
a processor (10);
a memory (11) used by the processor (10); and
a communication interface (12) used by the processor (10), wherein
controlling devices for controlling running of moving bodies belonging to a plurality of organizations are metaverse controlling devices (2A, 2B) provided in the metaverse environment, and
the processor (10), by executing a predetermined computer program stored in the memory (11),
acquires design information associated with the metaverse controlling devices (2A, 2B) via the communication interface (12), and stores the acquired design information in the memory (11),
constitutes an integrated metaverse by connecting the metaverse controlling devices (2A, 2B) in a predetermined level on a basis of the acquired design information associated with the respective metaverse controlling devices (2A, 2B), and
arranges objects used by the metaverse controlling devices (2A, 2B) in the integrated metaverse.

2. The information processing apparatus (1) according to claim 1, wherein
the objects used by the metaverse controlling devices (2A, 2B) are integrated and arranged in the integrated metaverse.

3. The information processing apparatus (1) according to claim 1, wherein
each of the metaverse controlling devices (2A, 2B) has a plurality of functions, and
the predetermined level is associated with a predetermined function selected from the plurality of functions.

4. The information processing apparatus (1) according to claim 1, wherein
the metaverse controlling devices (2A, 2B) are used by a plurality of organizations, and
the predetermined level is associated with a predetermined organization selected from the plurality of organizations.

5. The information processing apparatus (1) according to claim 1, wherein
the metaverse controlling devices (2A, 2B) are used by a plurality of groups, and
the predetermined level is associated with a predetermined group selected from the plurality of groups.

6. The information processing apparatus (1) according to claim 1, further comprising:
an access control section that controls an access to an object in the integrated metaverse.

7. The information processing apparatus (1) according to claim 1, wherein
a source metaverse that contains a source metaverse controlling device included in the metaverse controlling devices (2A, 2B) is connected to a destination metaverse that contains a destination metaverse controlling device to extend the source metaverse.

8. The information processing apparatus (1) according to claim 1, wherein
a function of checking a visual recognition status of a user in real time or on a basis of a log is provided.

9. An information processing method of, by a computer, integrating controlling operations with use of a metaverse environment,
controlling devices that control running of moving bodies belonging to a plurality of organizations being implemented by metaverse controlling devices (2A, 2B) provided in the metaverse environment,
the computer including a processor (10), a memory (11) used by the processor (10), and a communication inter face (12) used by the processor (10), the method comprising:
by the processor (10), by executing a predetermined computer program stored in the memory (11),
acquiring design information associated with the metaverse controlling devices (2A, 2B);
constituting an integrated metaverse by connecting the metaverse controlling devices (2A, 2B) in a predetermined level on a basis of the acquired design information associated with the respective metaverse controlling devices (2A, 2B); and
arranging objects used by the metaverse controlling devices (2A, 2B) in the integrated metaverse.

10. The information processing method according to claim 9, wherein,
in arranging the objects used by the metaverse controlling devices (2A, 2B) in the integrated metaverse, the objects used by the metaverse controlling devices (2A, 2B) are integrated and arranged.
